(19) Europäisches Patentamt / European Patent Office / Office européen des brevets

(11) **EP 2 437 932 B1**

(12) **FASCICULE DE BREVET EUROPEEN**

(45) Date de publication et mention de la délivrance du brevet:
**13.01.2016 Bulletin 2016/02**

(21) Numéro de dépôt: **10724751.2**

(22) Date de dépôt: **03.06.2010**

(51) Int Cl.:
***B31F 1/07*** *(2006.01)*

(86) Numéro de dépôt international:
**PCT/EP2010/057782**

(87) Numéro de publication internationale:
**WO 2010/139759 (09.12.2010 Gazette 2010/49)**

(54) **PAPIER ABSORBANT GAUFRE A MOTIF MIXTE**

GEPRÄGTES SAUGFÄHIGES PAPIER MIT GEMISCHTER STRUKTUR

EMBOSSED ABSORBENT PAPER WITH MIXED PATTERNS

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **04.06.2009 FR 0953683**

(43) Date de publication de la demande:
**11.04.2012 Bulletin 2012/15**

(73) Titulaire: **SCA TISSUE FRANCE**
**93400 Saint-Ouen (FR)**

(72) Inventeur: **BARREDO, Donald**
**F-68040 Ingersheim (FR)**

(74) Mandataire: **Gevers France**
**41, avenue de Friedland**
**75008 Paris (FR)**

(56) Documents cités:
**EP-A1- 1 391 174     EP-A1- 2 048 283**
**EP-A2- 1 772 257     US-A- 3 738 905**
**US-A- 3 961 119**

**Description**

La présente invention concerne le domaine des papiers absorbants à usage sanitaire ou domestique, et vise une feuille composée d'au moins trois plis de papier absorbant, les plis étant gaufrés.

Le domaine du papier sanitaire et domestique, concerne, de façon non limitative, les produits destinés à être appliqués sur la peau, tels que les serviettes à usage cosmétique, les mouchoirs, le papier toilette, ou destinés à l'essuyage tels que les essuie-tout, les chiffons d'essuyage, ou utilisés pour la table, tels que les serviettes de table. On utilise pour la réalisation de ces produits un papier absorbant obtenu par voie humide qui est ensuite transformé dans une phase sèche de fabrication. Le papier obtenu par voie humide, désigné ouate de cellulose est fabriqué selon les techniques conventionnelles connues sous le sigle CWP pour « conventional wet pressed » ou avec soufflage traversant connu sous le sigle TAD pour « through air dried ». Le papier est fabriqué plus particulièrement de manière à présenter une certaine capacité d'allongement, notamment par crêpage. On profite de la capacité d'allongement, conférée par le crêpage par exemple, pour gaufrer la feuille. Par le gaufrage on déforme la feuille par endroits de façon permanente, afin d'obtenir notamment des protubérances sur une face de la feuille. Le gaufrage permet d'augmenter l'épaisseur de la feuille mais aussi de la rendre plus souple en raison de la rupture de liaisons interfibres qu'il entraîne.

Dans le développement de nouveaux produits on cherche à rendre la feuille plus douce, plus moelleuse, plus attrayante tout en maintenant ou améliorant les caractéristiques fonctionnelles d'épaisseur et de résistances notamment. Ces dernières peuvent être affectées, améliorées ou dégradées, par le processus de gaufrage. L'opération de gaufrage s'effectue sur du papier à faible taux d'humidité, c'est à dire en transformation en partie sèche.

Les motifs de gaufrage les plus répandus sont constitués d'une répétition, sur une base géométrique, de protubérances élémentaires de faible section transversale et de forme géométrique simple. On en trouve un mode de réalisation dans le brevet US 5 173 351. Ce genre de motifs, dont la fréquence de répétition des protubérances est élevée - densité des éléments allant de 5 à 100 protubérances au cm$^2$ selon qu'il s'agit d'un essuie-tout ou un papier toilette - et dont la surface des sommets des protubérances élémentaires est inférieure à 1 mm$^2$, affecte principalement les caractéristiques liées à l'épaisseur de la feuille, d'une part, et à sa rigidité et sa résistance, d'autre part. Ces motifs permettent de réaliser un bon compromis entre les améliorations souhaitées des caractéristiques lorsque l'on transforme le produit semi-fini en produit fini, et les conditions de marche industrielle; ils permettent, notamment, l'application d'une pression de gaufrage suffisante.

On associe une pluralité de plis entre eux dans le but d'obtenir un produit épais. Les plis sont superposés généralement de façon à ce que les protubérances soient tournées vers l'intérieur de la feuille dans la mesure où l'on recherche une surface au toucher doux. Par ailleurs, les protubérances entre les plis adjacents ménagent entre elles des cavités donnant du moelleux à la feuille tout en assurant une bonne capacité d'absorption. Les protubérances peuvent être soit disposées sommets contre sommets en position dite pointes/pointes offrant a priori l'épaisseur maximale à la feuille. Elles peuvent aussi être disposées de manière à s'emboiter. L'épaisseur est moindre qu'en position pointes/pointes mais cette disposition convient à des applications liées à l'essuyage où la densité des protubérances de gaufrage est faible,

La présente invention concerne un produit composé de deux plis ou plus, chacun présentant un motif de gaufrage.

Lorsque l'on souhaite associer deux plis gaufrés en position pointes contre pointes on est confronté au problème du nestage. On désigne par ce terme l'emboîtement des protubérances d'un pli entre les protubérances de l'autre pli. Le nestage n'est pas souhaité quand on assemble les plis en pointes contre pointes.

Comme cela est rapporté dans le brevet US 5 173 351, on lie deux plis en les faisant passer par l'intervalle de serrage ménagé entre deux cylindres métalliques de motifs de gaufrage identiques. Ces cylindres sont disposés en parallèle, et entrainés au moyen de courroies ou autres organes équivalents de manière que leurs vitesses de rotation soient égales et de sens opposés. On règle les organes d'entrainement de manière que les bossages viennent coïncider aussi exactement que possible dans l'intervalle de serrage.

Lorsque les cylindres métalliques sont gravés parfaitement et qu'il n'y a pas de variation dans la disposition des picots les uns par rapport aux autres, l'association est bien pointes contre pointes. En réalité, dans la pratique, les techniques usuelles de gravure conduisent à deux types de décalage :

- Un décalage circonférentiel entre les picots disposés sur une même génératrice théorique du cylindre. Ce décalage est indépendant de la densité du motif.
- Un décalage axial le long de cette génératrice, dont, pour un certain mode d'usinage, l'amplitude varie selon une fonction périodique sinusoïdale avec une fréquence dépendant de la finesse du motif. Plus la finesse est grande, plus la fréquence des oscillations le long de la génératrice est élevée.

Ces tolérances de fabrication n'ont pas d'incidence sur la qualité de la liaison entre les deux feuilles lorsque les picots ont une surface de contact relativement importante. En effet la probabilité est faible de voir deux picots, de même indice sur les deux cylindres, tellement décalés l'un par rapport à l'autre qu'ils n'assurent plus de liaison.

Lorsqu'on transforme la double feuille obtenue selon ce procédé, en rouleaux de petite laize, 10, 20 ou 30 cm par exemple, on ne remarque pas de feuilles non liées.

Lorsque les surfaces de contact sont très faibles, des zones entières, formant de larges bandes orientées dans le sens machine, ne sont pas liées. Après transformation en rouleaux de papier hygiénique par exemple, dont la laize est inférieure à la largeur de ces bandes, on obtient des produits découpés à l'intérieur de ces mêmes bandes, qui sont composés d'un enroulement de deux feuilles non liées. Il s'ensuit un pourcentage de rebut important. US 5 173 351 propose de réaliser des motifs légèrement différents sur les deux plis, notamment avec des pas présentant une relation bien définie. De cette façon, on assure la présence d'un contact sur une zone que l'on peut définir aussi petite que l'on veut.

Le document EP 1 772 257 porte sur la fabrication de produits multiplis gaufrés associés en pointes/pointes dont les motifs de gaufrage sont conçus de façon à éviter également le phénomène de nestage. La solution est de gaufrer les deux plis séparément selon des motifs dont au moins une partie présente une forme allongée dans une direction. Les directions de chacun des plis forment entre elles une intersection.

De cette façon, on tolère une variation de position des deux plis entre eux. On note que les deux motifs sont agencés de manière à permettre au fabricant de choisir entre la relation pointes/pointes et la relation avec emboîtement des deux motifs.

D'autres documents décrivent des agencements de motifs présentant des protubérances avec des formes allongées pour éviter le phénomène du nestage entre les plis lorsqu'ils sont superposés.

Ainsi US 4 671 983 pour un rouleau formé de l'enroulement d'une feuille de papier propose de prévoir des premières protubérances tronconiques réparties régulièrement sur la feuille et des deuxièmes protubérances de forme allongée entre les premières protubérances. Ces dernières réduisent de façon importante le nestage entre les spires du rouleau.

US 3 738 905 propose un motif de gaufrage formé de surfaces planes et cavités. Les plis sont associés sur le long des surfaces planes disposées le long de lignes continues.

Lorsque la feuille est composée de deux plis au moins, on constate cependant une certaine rigidité.

Le problème que vise à résoudre l'invention est donc celui de réaliser une feuille de papier présentant au moins deux plis gaufrés, selon un motif formé au moins en partie de protubérances allongées dans le plan de la feuille, dont la rigidité est maîtrisée.

Conformément à l'invention, on résout ce problème avec une feuille de papier absorbant comprenant au moins un premier et un deuxième plis gaufrés d'ouate de cellulose, de grammage compris entre 10 et 40 g/m$^2$, chacun des plis comprenant des protubérances sur la face tournées vers l'intérieur de la feuille correspondant à des cavités sur la face extérieure, avec des premières protubérances sur le premier pli de forme allongée, des premières protubérances sur le deuxième pli de forme allongée, au moins une partie des premières protubérances du premier pli étant en contact avec au moins une partie des premières protubérances du deuxième pli. La feuille selon l'invention est caractérisée par le fait que le premier pli et le deuxième pli comprennent chacun des deuxièmes protubérances de forme tronconique, au moins une partie des premières protubérances étant adjacente au moins en partie à des deuxièmes protubérances, que les premières protubérances dudit premier pli sont alignées selon une première direction et les premières protubérances dudit second pli sont alignées selon une deuxième direction, les deux directions formant un angle alpha non nul entre elles, au moins une partie des deuxièmes protubérances formant des alignements séparant les alignements de premières protubérances.

Par forme tronconique on comprend des protubérances à section circulaire parallèlement au plan de la feuille mais aussi ovale ou polygonale, notamment carrée, et dont le rapport de la plus grande dimension à la plus petite est faible, inférieur à 2.

Par protubérances adjacentes, on désigne des protubérances voisines dans le voisinage immédiat les unes des autres sans interposition d'aucune autre protubérance.

Par protubérances allongées, on désigne des protubérances dont la section, faite parallèlement au plan de la feuille, forme une ligne ou un segment. Le rapport de la dimension dans le sens de la longueur à la dimension transversale à la ligne, c'est à dire la largeur, est supérieur à trois. Il est de préférence supérieur à cinq. La longueur de la ligne ou du segment est, de préférence également, dans un rapport inférieur à vingt et plus particulièrement inférieur à dix avec la largeur ; cette ligne peut être fermée.

Grâce à l'invention, on bénéficie du croisement des protubérances allongées qui assure un contact entre les deux plis, dans la mesure où les alignements entre les protubérances allongées des deux plis forment un angle suffisamment élevé. Le meilleur rendement est obtenu avec un croisement à angle droit.

Différents modes de réalisation sont envisageables. Les caractéristiques suivantes sont considérées individuellement ou bien en combinaison.

- Au moins une partie des deuxièmes protubérances forme des alignements interposés entre deux alignements de premières protubérances.
- Les premières protubérances sont disposées en alternance, le long d'un alignement, avec au moins une deuxième protubérance.
- Les premières protubérances sont en forme de segments, ceux-ci étant parallèles entre eux.
- Lesdits segments sont isolés et ne se coupent pas.
- Les dits segments sont rectilignes ou avec une portion courbe.

- La largeur des premières protubérances est égale à celle des deuxièmes protubérances.
- La longueur d'une première protubérance est comprise entre 3 et 20 fois la largeur d'une deuxième protubérance, de préférence entre 3 et 10 fois et plus particulièrement entre 5 et 10 fois.
- Les premières protubérances du premier pli sont identiques aux premières protubérances du deuxième pli.
- La feuille de papier absorbant comprend au moins un troisième pli gaufré, superposé au deuxième pli. De préférence, le troisième pli comporte des premières et deuxièmes protubérances, l'orientation des premières protubérances du troisième pli étant la même que l'orientation des premières protubérances du premier pli.
- La feuille de papier dont au moins l'un des plis comprend des troisièmes protubérances, la hauteur des troisièmes protubérances étant supérieure à celles des premières et des secondes protubérances.

L'invention sera mieux comprise et d'autres buts, détails, caractéristiques ou avantages de celle-ci apparaîtront plus clairement au cours de la description explicative détaillée qui suit des modes de réalisation de l'invention donnés à titre d'exemples purement illustratifs et non limitatifs, en référence aux dessins schématiques annexés.

Sur ces dessins,

La figure 1 représente une feuille de papier à deux plis, vue de dessus, avec le dessin des protubérances de chacun des plis, celui du pli inférieur étant formé de traits fins ;

La figure 2 est une vue en coupe transversale de la figure 1 ;

La figure 3 est une vue en coupe transversale d'une feuille conforme à l'invention composée de trois plis.

La figure 4 est une vue de dessus d'une feuille conforme à l'invention, l'un des plis comprenant des troisièmes protubérances.

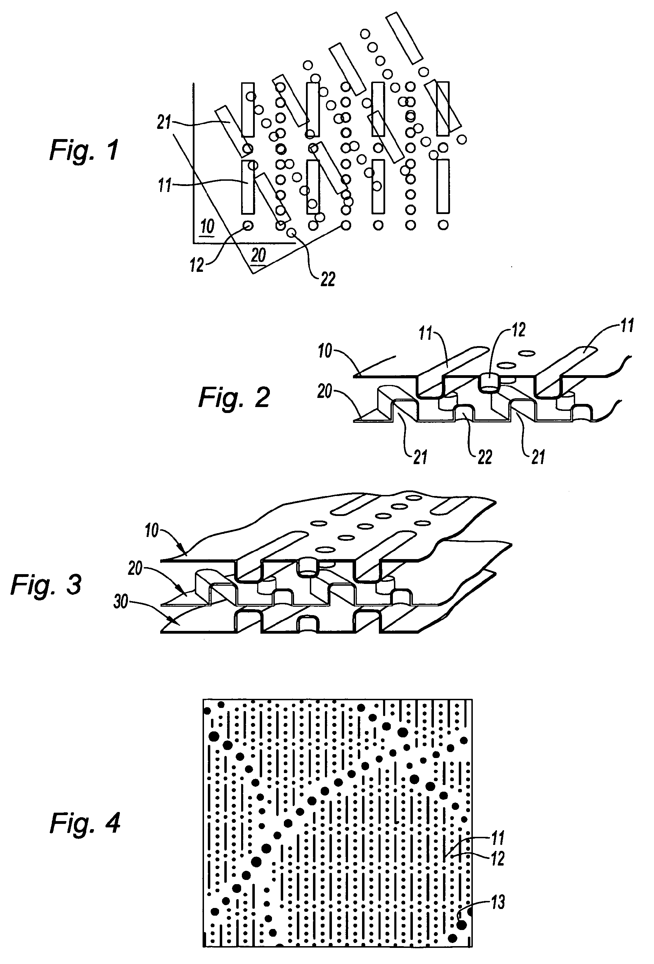

La figure 1 illustre la disposition relative des deux plis 10 et 20 constituant une feuille 1. Les deux plis sont en papier absorbant, avantageusement en papier tissue crêpé. Pour ce type d'application le grammage du papier est compris entre 10 et 40 grammes par m$^2$.

Un premier pli 10 est gaufré avec un motif de gaufrage formé de premières protubérances 11 et de deuxièmes protubérances 12. Le deuxième pli est gaufré avec un motif de gaufrage formé de premières protubérances 21 et de deuxièmes protubérances 22. Les premières protubérances 11, 21 sont en forme de segments ici rectilignes et les deuxièmes protubérances sont de forme tronconique à section ovale, parallèlement au plan de la feuille. La longueur des premières protubérances est, dans cet exemple, dans un rapport quatre avec la longueur des deuxièmes protubérances. Les protubérances ont sensiblement les mêmes largeurs.

Les premières protubérances 11 forment des alignements de segments parallèles entre eux, séparés par des alignements de disques des deuxièmes protubérances 12. Ainsi, le motif du premier pli 10 présente une alternance de premières protubérances 11 et de deuxièmes protubérances 12. Cette alternance est aussi bien dans le sens de la longueur des segments 11 que dans le sens de leur largeur.

Comme on le voit sur la figure 2 qui est une coupe transversale de la feuille de la figure 1 selon la direction II-II, la hauteur des premières protubérances 11 est dans cet exemple la même que celle des deuxièmes protubérances 12. Cependant il entre également dans l'objet de l'invention de réaliser des deuxièmes protubérances de moindre hauteur.

Les deux motifs sont, dans cet exemple, identiques avec cette différence que le motif du pli inférieur 20 de la figure est tourné d'un angle alpha par rapport au motif du pli supérieur 10. L'angle est défini entre les directions principales des deux motifs.

Le gaufrage est réalisé par déformation des plis, chacun sur un cylindre de gaufrage rigide gravé. La gravure est composée de picots, en relief sur la surface du cylindre, correspondant aux protubérances à obtenir.

Dans la mesure où l'on souhaite obtenir un aspect textile, on détermine que les premières protubérances 11 ou 21 doivent avoir une largeur comprise entre 0,2 mm et 1,2 mm. La largeur correspondante des deuxièmes protubérances 12 ou 22 est par exemple égale à celle des premières protubérances.

L'espacement entre deux picots adjacents mesuré au niveau de leur base est de préférence au moins égal à 0,15 mm.

Le contact entre les deux plis est assuré par les premières protubérances 11 et 21 des deux plis. Afin d'assurer l'existence d'au moins un contact, on détermine un angle alpha en fonction de la longueur « 1 » des premières protubérances 11 et 21 et la distance « e » séparant deux premières protubérances 11 et 21 adjacentes dans le sens perpendiculaire à la direction principale de celles-ci, le sens travers pour le présent exemple. L'angle $\alpha$ est ainsi choisi de telle façon que $\sin\alpha$ est au moins égal au rapport e/l.

$$\sin\alpha < \text{ou} = e/l$$

On a représenté sur la figure 2 la coupe d'une feuille à deux plis, mais il est préféré d'y associer un troisième pli 30 gaufré avec un motif présentant les mêmes alignements de premières et deuxièmes protubérances que le premier pli et de le disposer avec la même orientation que le premier pli. Ce mode de réalisation est représenté sur la figure 3.

On obtient ainsi de façon remarquable un papier à la fois :

épais, en raison de la triple épaisseur,
bien associé, donc avec un aspect textile et une main marqués,
souple, grâce au gaufrage mixte de premières protubérances et de deuxièmes protubérances. En fait, on peut ajuster la souplesse en jouant sur le rapport entre les premières et deuxièmes protubérances.

L'invention ne se limite pas au mode de réalisation représenté. Les premières protubérances peuvent avoir une forme curviligne ou même une forme fermée. La forme curviligne peut être celle d'un « S » majuscule. Les premières protubérances restent alignées.

Si, sur les deux plis extérieurs, les motifs sont les mêmes, il suffit d'un décalage entre les motifs pour assurer un point de contact. Ainsi en remplaçant les premières protubérances des exemples illustrés par les figures, par des premières protubérances en forme de « S », un décalage latéral ou longitudinal des deux plis assure la présence d'un contact dans les parties courbes.

On a représenté sur la figure 4 une variante de réalisation d'une feuille selon l'invention dans laquelle au moins l'une des plis comprend des troisièmes protubérances 13. Avantageusement ces troisièmes protubérances ont une hauteur par rapport au plan de la feuille qui est supérieure à celle des premières 11 et des deuxièmes protubérances 12.

**Revendications**

1. Feuille de papier absorbant comprenant au moins un premier (10) et un deuxième (20) plis gaufrés d'ouate de cellulose, chacun des plis de grammage compris entre 10 et 40 g/m$^2$ comprenant des protubérances sur la face tournées vers l'intérieur de la feuille correspondant à des cavités sur la face extérieure, avec des premières protubérances (11) sur le premier pli de forme allongée, des premières protubérances (21) sur le deuxième pli de forme allongée, au moins une partie des premières protubérances (11) du premier pli étant en contact avec au moins une partie des premières protubérances (21) du deuxième pli, **caractérisée par le fait que** le premier pli et le deuxième pli (10, 20) comprennent chacun des deuxièmes protubérances (12 ; 22) de forme tronconique, au moins une partie des premières protubérances (11 ; 21) étant adjacente au moins en partie à des deuxièmes protubérances (12 ; 22), que les premières protubérances dudit premier pli sont alignées selon une première direction et les premières protubérances dudit second pli sont alignées selon une deuxième direction, les deux directions formant un angle alpha non nul entre elles, au moins une partie des deuxièmes protubérances (12 ; 22) formant des alignements séparant les alignements de premières protubérances (11 ; 21).

2. Feuille selon la revendication précédente dont les premières protubérances (11 ; 21) alternent, le long d'un alignement, avec au moins une deuxième protubérance (12 ; 22).

3. Feuille selon la revendication précédente dont les premières protubérances (11 ; 21) forment sur au moins un pli des segments isolés sans intersection, parallèles entre eux.

4. Feuille selon la revendication précédente dont lesdits segments sont rectilignes.

5. Feuille selon l'une des revendications précédentes dont la largeur des premières protubérances (11 ; 21) est égale à celle des deuxièmes protubérances (12 ; 22).

6. Feuille selon l'une des revendications précédentes dont la longueur d'une première protubérance (11 ; 21) est comprise entre 3 et 20 fois la largeur d'une deuxième protubérance (12 ; 22), de préférence entre 3 et 10 fois notamment entre 5 et 10 fois.

7. Feuille selon l'une des revendications précédentes dont les premières protubérances (11) du premier pli (10) sont identiques aux premières protubérances (21) du deuxième pli (20).

8. Feuille de papier absorbant selon l'une des revendications précédentes comprenant au moins un troisième pli gaufré (30), superposé au deuxième pli (20).

9. Feuille selon la revendication précédente dont le troisième pli (30) comporte des premières et deuxièmes protubérances, l'orientation des premières protubérances du troisième pli étant la même que l'orientation des premières protubérances du premier pli.

10. Feuille selon l'une des revendications précédentes, dont au moins l'un des plis comprend des troisièmes protubérances, la hauteur des troisièmes protubérances étant supérieure à celles des premières et des secondes protubérances.

**Patentansprüche**

1. Saugpapierblatt, das wenigstens eine erste (10) und eine zweite (20) geprägte Zellulosewatte-Lage aufweist, wobei jede der Lagen mit einem Flächengewicht im Bereich von 10 bis 40 g/m$^2$ Erhebungen auf der Fläche aufweist, die zur Innenseite des Blatts gewendet ist, die Vertiefungen auf der äußeren Fläche entsprechen, mit ersten Erhebungen (11) auf der ersten Lage mit langgestreckter Form, ersten Erhebungen (21) auf der zweiten Lage mit langgestreckter Form, wobei wenigstens ein Teil der ersten Erhebungen (11) der ersten Lage in Kontakt mit wenigstens einem Teil der ersten Erhebungen (21) der zweiten Lage ist, **dadurch gekennzeichnet, dass** die erste Lage und die zweite Lage (10, 20) jeweils zweite Erhebungen (12; 22) mit Kegelstumpfform haben, wobei wenigstens ein Teil der ersten Erhebungen (11; 21) wenigstens zu einem Teil der zweiten Erhebungen (12; 22) benachbart ist, dass die ersten Erhebungen der ersten Lage auf eine erste Richtung ausgerichtet sind und die ersten Erhebungen der zweiten Lage auf eine zweite Richtung ausgerichtet sind, wobei die zwei Richtungen zueinander einen von null verschiedenen Winkel alpha bilden, wobei wenigstens ein Teil der zweiten Erhebungen (12; 22) Ausrichtungen bildet, die die Ausrichtungen der ersten Erhebungen (11; 21) trennen.

2. Blatt nach dem vorhergehenden Anspruch, wobei die ersten Erhebungen (11; 21) längs der Ausrichtung mit wenigstens einem zweiten Vorsprung (12; 22) abwechseln.

3. Blatt nach dem vorhergehenden Anspruch, wobei die ersten Erhebungen (11; 21) auf wenigstens einer Lage isolierte Segmente ohne Schnittpunkt, die zueinander parallel sind, bilden.

4. Blatt nach dem vorhergehenden Anspruch, wobei die Segmente rechtwinklig sind.

5. Blatt nach den vorhergehenden Ansprüche, wobei die Breite der ersten Erhebungen (11; 21) gleich jener der zweiten Erhebungen (12; 22) ist.

6. Blatt nach einem der vorhergehenden Ansprüche, wobei die Länge eines ersten Vorsprungs (11; 21) im Bereich der 3- bis 20-fachen Breite eines zweiten Vorsprungs (12; 22), vorzugsweise der 3- bis 10-fachen Breite und insbesondere der 5- bis 10-fachen Breite liegt.

7. Blatt nach einem der vorhergehenden Ansprüche, wobei die ersten Erhebungen (11) der ersten Lage (10) mit den ersten Erhebungen (21) der zweiten Lage (20) übereinstimmen.

8. Saugpapierblatt nach einem der vorhergehenden Ansprüche, das wenigstens eine dritte geprägte Lage (30) umfasst, die der zweiten Lage (20) überlagert ist.

9. Blatt nach dem vorhergehenden Anspruch, wobei die dritte Lage (30) erste und zweite Erhebungen aufweist, wobei die Orientierung der ersten Erhebungen der dritten Lage gleich der Orientierung der ersten Erhebungen der ersten Lage ist.

10. Blatt nach einem der vorhergehenden Ansprüche, wobei wenigstens eine der Lagen dritte Erhebungen aufweist, wobei die Höhe der dritten Erhebungen größer ist als jene der ersten und zweiten Erhebungen.

**Claims**

1. Sheet of absorbent paper comprising at least one first (10) and one second (20) embossed plies of tissue, each of the plies with a basis weight of between 10 and 40 $g/m^2$ comprising protuberances on the inward-facing side of the sheet corresponding to cavities on the outer side, with first protuberances (11) on the first ply of elongate form, first protuberances (21) on the second ply of elongate form, at least some of the first protuberances (11) of the first ply being in contact with at least some of the first protuberances (21) of the second ply, **characterized in that** the first ply and the second ply (10, 20) each comprise second protuberances (12; 22) of frustoconical form, at least some of the first protuberances (11; 21) being at least partly adjacent to the second protuberances (12; 22), that the first protuberances of said first ply are aligned in a first direction and the first protuberances of said second ply are aligned in a second direction, the two directions forming a non-zero angle alpha between them, at least some of the second protuberances (12; 22) forming alignments interposed between two alignments of first protuberances (11; 21).

2. Sheet according to the preceding claim, in which the first protuberances (11; 21) alternate, along an alignment, with at least one second protuberance (12; 22).

3. Sheet according to the preceding claim, in which the first protuberances (11; 21) form, on at least one ply, isolated segments with no intersection that are parallel with each other.

4. Sheet according to the preceding claim, in which said segments are rectilinear.

5. Sheet according to one of the preceding claims, in which the width of the first protuberances (11; 21) is equal to that of the second protuberances (12; 22).

6. Sheet according to one of the preceding claims, in which the length of a first protuberance (11; 21) is between 3 and 20 times the width of a second protuberance (12; 22), preferably between 3 and 10 times, notably between 5 and 10 times.

**7.** Sheet according to one of the preceding claims, in which the first protuberances (11) of the first ply (10) are identical to the first protuberances (21) of the second ply (20).

**8.** Sheet of absorbent paper according to one of the preceding claims, comprising at least one third embossed ply (30), overlaid on the second ply (20).

**9.** Sheet according to the preceding claim, in which the third ply (30) comprises first and second protuberances, the orientation of the first protuberances of the third ply being the same as the orientation of the first protuberances of the first ply.

**10.** Sheet according to one of the preceding claims, in which at least one of the plies includes third protuberances, the height of the third protuberances being greater than those of the first and second protuberances.

Fig. 1

Fig. 2

Fig. 3

Fig. 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5173351 A
- EP 1772257 A
- US 4671983 A
- US 3738905 A